# EUROPEAN PATENT APPLICATION

(11) **EP 2 472 381 A2**
(43) Date of publication of application: **04.07.2012**
(21) Application number: 11193367.7
(22) Date of filing: 13.12.2011
(51) Int. Cl.: G06F 3/048

(54) **Method and apparatus for providing mouse right click function in touch screen terminal**

(30) Priority: 29.12.2010 KR 20100137712
(71) Applicant: Samsung Electronics Co., Ltd., Suwon-si, Gyeonggi-do (KR)
(72) Inventor: Lee, Ju-Hong, Incheon (KR)
(74) Representative: Jenkins, Richard Gavin

(57) **Abstract**

A method and apparatus for providing a mouse right click function in a touch screen terminal are provided. The method includes detecting occurrence of a first touch, detecting occurrence of a second touch in a status where the first touch is maintained, and displaying an option menu including a plurality of functions on a screen.

## Description

### TECHNICAL FIELD OF THE INVENTION

The present invention relates to a touch screen terminal. More particularly, the present invention relates to a method and apparatus for providing a mouse right click function in the touch screen terminal.

### BACKGROUND OF THE INVENTION

With the advent of the information-oriented society, the use of various terminals that include a function of providing and processing information is rapidly increasing. To cope with such a trend, there is ongoing research for improving portability of the terminals. In recent years, terminals that include a touch screen panel which detects a screen touch to receive a user input are provided by removing a keypad that occupies a fixed space in the terminals.

In particular, terminals (e.g., a smart phone, a table Personal Computer (PC), and such) are recently provided which can perform functions similar to the conventional PC while providing high portability. However, since most of the conventional terminals use only a touch screen panel to receive a user input, it is difficult to perform various functions by using a simple input mechanism in comparison with the conventional PC which receives the user input by the use of a mouse and a keyboard. For example, the conventional PC provides the mouse so as to perform a selection operation by a left click of the mouse and to perform various functions related to positions clicked by a right click of the mouse, which results in inconvenience of multiple touches when a terminal that supports the multiple screens performs a function desired by the use.

### SUMMARY OF THE INVENTION

To address the above-discussed deficiencies of the prior art, it is a primary object to provide at least the advantages described below. Accordingly, an aspect of the present invention is to provide a method and apparatus for providing a mouse right click function in a touch screen terminal.

Another aspect of the present invention is to provide a method and apparatus for providing a mouse right click function by detecting multiple touches in a touch screen terminal.

Another aspect of the present invention is to provide a method and apparatus for providing a mouse right click function when another area is touched in a status where a touch for a specific area is maintained in a touch screen terminal.

In accordance with an aspect of the present invention, a method of providing a mouse right click function in a touch screen terminal is provided. The method includes detecting occurrence of a first touch, detecting occurrence of a second touch in a status where the first touch is maintained, and displaying an option menu including a plurality of functions on a screen.

In accordance with another aspect of the present invention, an apparatus for providing a mouse right click function in a touch screen terminal is provided. The apparatus includes a touch screen panel for detecting a screen touch of a user, a controller for detecting occurrence of a first touch by using the touch screen panel and for detecting occurrence of a second touch in a state where the first touch is maintained, and a display unit for displaying an option menu including a plurality of functions on a screen under the control of the controller.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features and advantages of certain embodiments of the present invention will be more apparent from the following detailed description taken in conjunction with the accompanying drawings, in which:

FIG. 1 is a block diagram of a touch screen terminal according to an embodiment of the present invention;

FIG. 2 illustrates a process of performing a mouse right click function in a touch screen terminal according to an embodiment of the present invention;

FIG. 3 illustrates a process of performing a mouse right click function in a touch screen terminal according to an embodiment of the present invention; and

FIG. 4A to FIG. 4C illustrate a screen configured to perform a mouse right click function in a touch screen terminal according to an embodiment of the present invention.

### DETAILED DESCRIPTION OF THE INVENTION

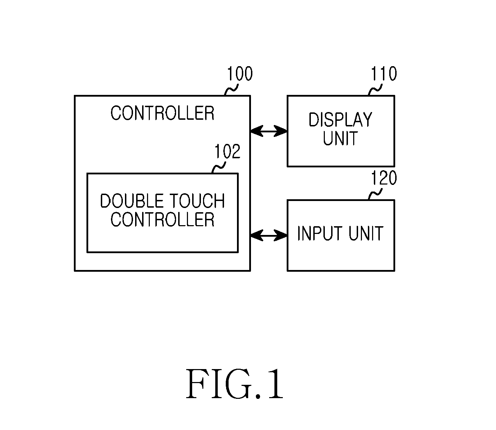

FIGURES 1 to 4C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Preferred embodiments of the present invention will be described with reference to the accompanying drawings. In the following description, well-known functions or constructions are not described in detail as they would obscure the invention in unnecessary detail. And, terms described below, which are defined considering functions in the present invention, can be different depending on the user and operator's intention or practice. Therefore, the terms should be defined on the basis of the disclosure throughout this specification

The present invention described hereinafter relates to a method and apparatus for providing a mouse right click function in a touch screen terminal. Herein, the mouse right click function is defined as a function which is similar to that provided in a conventional Personal Computer (PC) and which directly performs a specific operation when the operation is selected by displaying an option menu including a plurality of operations that may be performed for a specific position on a screen.

FIG. 1 is a block diagram of a touch screen terminal according to an embodiment of the present invention.

Referring to FIG. 1, the touch screen terminal includes a controller 100, a display unit 110, and an input unit 120. The controller 100 includes a double touch controller 102.

The controller 100 controls and processes an overall operation of the touch screen terminal. By the use of the input unit 120, the controller 100 detects occurrence of a user touch at a specific position on a screen, and detects release of the user touch to perform a function corresponding to the specific position

The controller 100 includes the double touch controller 102 according to the present invention in order to control and process an operation for performing a mouse right click function by detecting multiple touches of a user. That is, in a status where the user touch is maintained in the specific position, if a user touch occurs in another area, the double touch controller 102 controls and processes the operation for performing the mouse right click function. In this situation, if a touch maintained until a next touch occurs is defined as a first touch and if the next touch that occurs in a status where the first touch is maintained is defined as a second touch, then the double touch controller 102 may compare coordinates of the first touch and the second touch and if the second touch is located in the right side of the first touch, may perform the mouse right click function. Herein, the maintaining of the touch implies a status where a user's finger (or pen) remains in contact with the screen after the user's finger (or pen) is brought in contact with the screen.

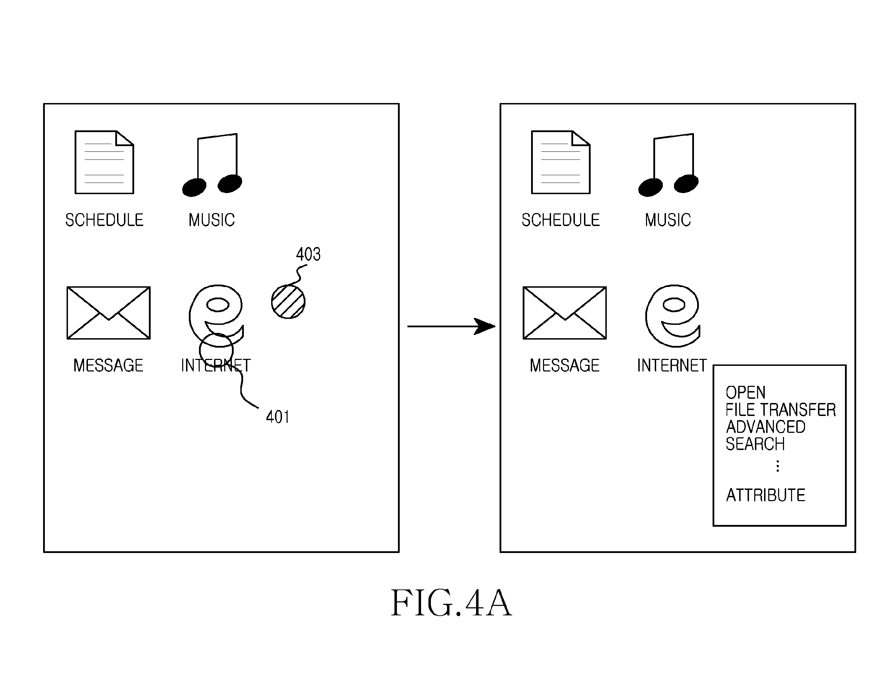

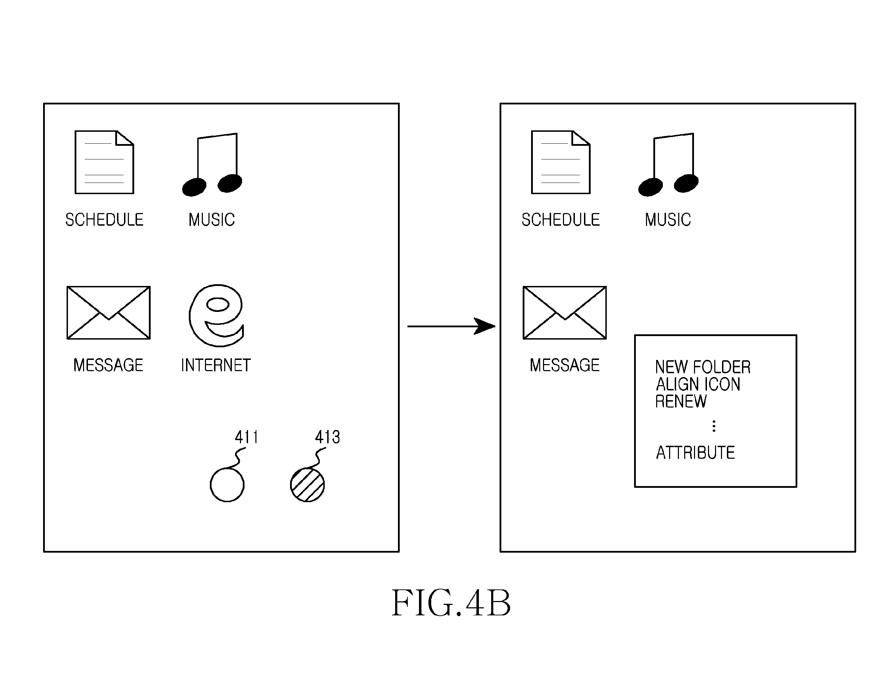

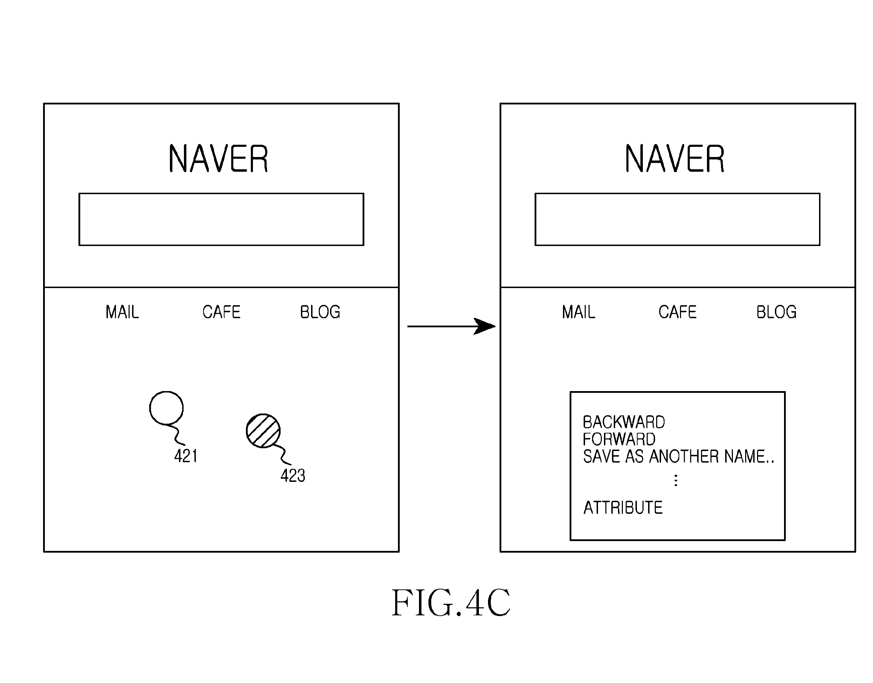

When the mouse right click function is performed, the double touch controller 102 confirms a function corresponding to a specific area at which the first touch occurs or a function which is currently being performed, and provides control such that an option menu including associated functions for the confirmed function is displayed on the screen of the display unit 110. For example, as illustrated in FIG. 4A, if a first touch 401 occurs at an area that displays an Internet icon on the screen and a second touch 403 occurs at another area in a status where the first touch is maintained, then the double touch controller 102 confirms that "open", "file transfer", "advanced search", "cut", "copy", "create shortcut", "delete", "rename", "attribute", and such, are present as functions that may be performed for the Internet icon, and provides control such that an option menu including the confirmed functions are displayed on the screen. In addition, as illustrated in FIG. 4B, if a first touch 411 occurs at a background area that does not display an icon on the screen and a second touch 413 occurs at another area in a status where the first touch 411 is maintained, then the double touch controller 102 confirms that "new folder", "align icon", "renew", "store to configuration table", "graphic option", "display mode", "undo copy", "attribute", and such, are present as functions that may be performed for the background area, and provides control such that an option menu including the confirmed functions are displayed on the screen. In addition, as illustrated in FIG. 4C, if a first touch 421 occurs at any area in a status where a web browser is executed on the screen and if a second touch 423 occurs at another area in a status where the first touch 421 is maintained, then the double touch controller 102 confirms that "backward", "forward", "save background as another name", "set to background", "copy background screen", "set to background screen item", "select all", "paste", "create shortcut", "add to favorites", "view source", "encoding", "print", "renew", "attribute", and such, are present as functions that may be performed for the web browser, and provides control such that an option menu including the confirmed functions are displayed on the screen.

The display unit 110 displays a variety of status information which is generated while the touch screen terminal operates, alphanumeric characters, and images. In particular, when a mouse right click event occurs under the control of the controller 100, the display unit 110 displays an option menu including a plurality of functions, which may be performed for a corresponding position, on the screen.

The input unit 120 includes at least one function key and touch screen panel, and provides the controller 100 with data corresponding to a key pressed by a user or data corresponding to a position touched by the user. In particular, the input unit 120 detects a user's contact on the screen of the display unit 110 by the use of the touch screen panel and reports occurrence of the touch to the controller 100, and also reports to the controller 100 whether the touch is maintained or released by the use of a user contact status. Herein, the touch release implies a status where a user's finger (or pen) in contact with the screen is released from the screen. In addition, the input unit 120 provides the controller 100 with a coordinate of a position at which the screen is touched.

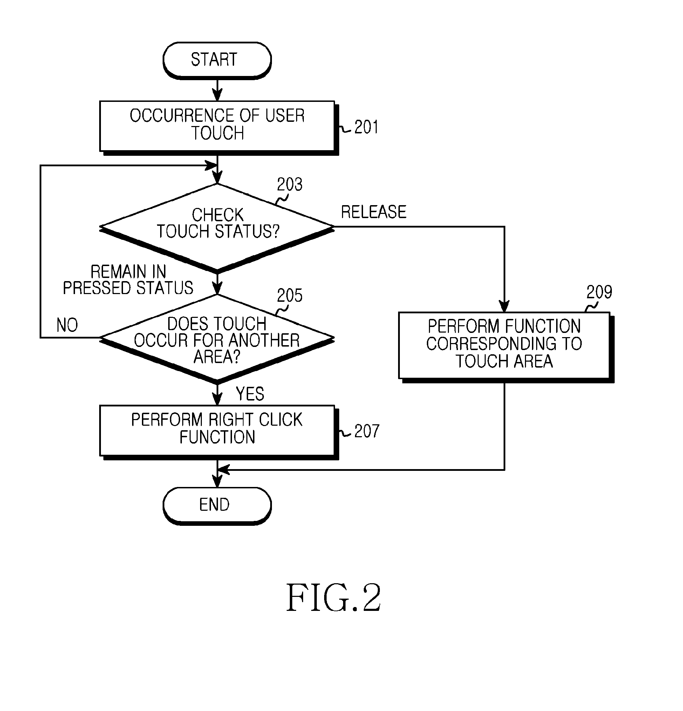

FIG. 2 illustrates a process of performing a mouse right click function in a touch screen terminal according to an embodiment of the present invention.

Referring to FIG. 2, when a user touch for a touch screen occurs in step 201, the terminal checks a status of the touch in step 203. That is, the terminal checks whether the user touch is maintained or released. Herein, the touch maintaining status implies a status where a user's finger (or pen) remains in contact with the screen after the user's finger (or pen) is brought in contact with the screen, and the touch release status implies a status where the user releases the finger (or pen) from the screen.

If the user touch is released, proceeding to step 209, the terminal performs a function corresponding to a position at which the touch occurs according to the conventional technique, and the procedure of FIG. 2 ends.

Otherwise, if the user touch is maintained, proceeding to step 205, the terminal determines whether a touch for a second area occurs. If the touch for the second area occurs in a status where the touch occurred in step 201 is maintained, proceeding to step 207, the terminal performs the mouse right click function. That is, the terminal may display an option menu, which includes a function corresponding to an area of the touch occurred in step 201 or associated functions corresponding to a function currently being performed, on the screen. For example, as illustrated in FIG. 4A, if the first touch 401 occurs at an area that displays an Internet icon on the screen and the second touch 403 occurs at another area in a status where the first touch is maintained, then the terminal may display an option menu including functions such as "open", "file transfer", "advanced search", "cut", "copy", "create shortcut", "delete", "rename", "attribute", and such, on the screen. In addition, as illustrated in FIG. 4B, if the first touch 411 occurs at a background area that does not display an icon on the screen and the second touch 413 occurs at another area in a status where the first touch 411 is maintained, then the terminal may display an option menu including functions such as "new folder", "align icon", "renew", "store to configuration table", "graphic option", "display mode", "undo copy", "attribute", and such, on the screen. In addition, as illustrated in FIG. 4C, if the first touch 421 occurs at any area in a status where a web browser is executed on the screen and if the second touch 423 occurs at another area in a status where the first touch 421 is maintained, then terminal may display an option menu including "backward", "forward", "save background as another name", "set to background", "copy background screen", "set to background screen item", "select all", "paste", "create shortcut", "add to favorites", "view source", "encoding", "print", "renew", "attribute", and such, on the screen.

Thereafter, the procedure of FIG. 2 ends.

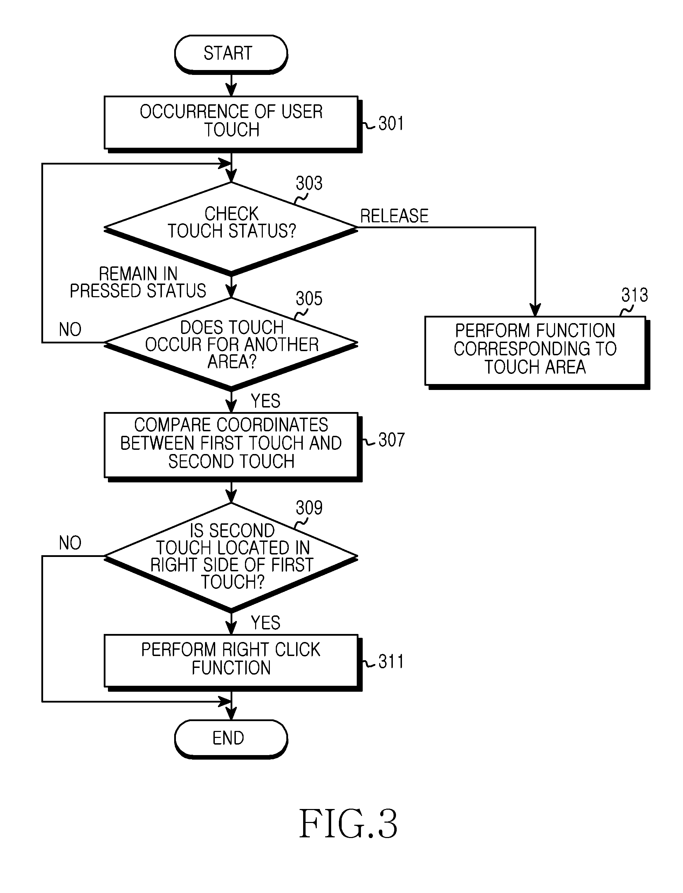

FIG. 3 illustrates a process of performing a mouse right click function in a touch screen terminal according to an embodiment of the present invention.

Referring to FIG. 3, when a user touch occurs for a touch screen in step 301, the terminal checks a status of the touch in step 303. That is, the terminal checks whether the user touch is maintained or released. Herein, the touch maintaining status implies a status where a user's finger (or pen) remains in contact with the screen after the user's finger (or pen) is brought in contact with the screen, and the touch release status implies a status where the user releases the finger (or pen) from the screen.

If the user touch is released, proceeding to step 313, the terminal performs a function corresponding to a position at which the touch occurs according to the conventional technique, and the procedure of FIG. 3 ends.

If the user touch is maintained, proceeding to step 305, the terminal determines whether a touch for a second area occurs. When the touch does not occur for the second area, returning to step 303, the terminal determines again the touch status.

If the touch for the second area occurs in a status where the touch occurred in step 301 is maintained, proceeding to step 307, the terminal compares a coordinate of the first touch occurred in step 301 and a coordinate of a second touch occurred in step 305.

In step 309, the terminal determines whether the second touch is located in the right side of the first touch. If the second touch is not located in the right side of the first touch, the procedure of FIG. 3 ends.

If the second touch is located in the right side of the first touch, proceeding to step 311, the terminal may perform the mouse right click function. That is, the terminal may display an option menu, which includes a function corresponding to an area of the touch occurred in step 301 or associated functions corresponding to a function currently being performed, on the screen. The option menu may be configured in the step 207 in the same manner as that described with reference to FIG. 4A to FIG. 4C.

Thereafter, the procedure of FIG. 3 ends.

It has been described above that the mouse right click function is performed when the second touch occurs in a status where the first touch is maintained or the mouse right click function is performed when the second touch occurs in the right side of the first touch in a status where the first touch is maintained. However, according to a design rule, a plurality of functions that may be provided by using the mouse right click function may be classified into a plurality of groups so as to provide an option menu including functions corresponding to one group among the plurality of groups according to a direction in which the second touch occurs with respect to the first touch in a status where the first touch is maintained. For example, when the second touch occurs in the left side of the first touch in a status where the first touch is maintained, functions predetermined by a user may be provided for the option menu, and when the second touch occurs in the right side of the first touch in a status where the first touch is maintained, functions predetermined in a system may be provided for the option menu. Herein, it is apparent that a function included in the option menu of the mouse right click function when the second touch occurs in the left side with respect to the first touch and a function included in the option menu of the mouse right click function when the second touch occurs in the right side with respect to the first touch may be modified variously according to the design rule.

In addition, although the option menu including an associated function for an area in which the first touch occurs is provided in the aforementioned description, an option menu including an association function for an area in which the second touch occurs may be provided according to the design rule.

According to embodiments of the present invention, when a touch for another area occurs in a status where a touch for a specific area is maintained in a touch screen terminal, various functions such as an event of generating a mouse right click are provided. Therefore, a function desired by a user may be promptly performed by using an advantage of an interface of a conventional Personal Computer (PC), and inconvenience caused by full touching can be resolved.

While the present invention has been particularly shown and described with reference to embodiments thereof, it will be understood by those skilled in the art that various changes in form and details may be made therein without departing from the spirit and scope of the present invention as defined by the appended claims.

## Claims

1. A method of providing a mouse right click function in a touch screen terminal, the method comprising:
detecting (201) occurrence of a first touch;
detecting (205) occurrence of a second touch in a status where the first touch is maintained (203); and
displaying (207) an option menu including a plurality of functions on a screen.

2. The method of claim 1, further comprising:
after the detecting (305) of the occurrence of the second touch, comparing (307) a coordinate of a position at which the first touch occurs and a coordinate of a position at which the second touch occurs; and
determining (309) whether the position of the first touch and the position of the second touch satisfy a predetermined position condition as a result of the comparing of the coordinates of the positions.

3. The method of claim 2, wherein if the predetermined position condition (309) is satisfied, an option menu including the plurality of functions is displayed (311) on the screen.

4. The method of claim 2, wherein the position condition is indicated in a direction in which the second touch is located with respect to the position of the first touch.

5. The method of claim 1, wherein the displaying (311) of the option menu including the plurality of functions on the screen comprises:
confirming a function currently being executed; and
displaying an option menu, which includes an associated function with respect to the function currently being executed, on the screen,
wherein if a web browser is currently being executed, the option menu includes at least one of functions among 'new folder', 'align icon', 'renew', 'store to configuration table', 'graphic option', 'display mode', 'undo copy', and 'attribute'.

6. The method of claim 1, wherein the displaying (311) of the option menu including the plurality of functions on the screen comprises displaying an option menu, which includes an associated function corresponding to the position at which the first touch occurs, on the screen.

7. The method of claim 6, wherein if the position at which the first touch occurs is an area that displays a specific icon, the option menu includes at least one of functions among 'open', 'file transfer', 'advanced search', 'cut', 'copy', 'create shortcut', 'delete', 'rename', and 'attribute',
wherein if the position at which the first touch occurs is a background area that does not display an icon, the option menu includes at least one of functions among 'new folder', 'align icon', 'renew', 'store to configuration table', 'graphic option', 'display mode', 'undo copy', and 'attribute'.

8. An apparatus for providing a mouse right click function in a touch screen terminal, the apparatus comprising:
a touch screen panel (120) for detecting a screen touch of a user;
a controller (100) for detecting occurrence of a first touch by using the touch screen panel and for detecting occurrence of a second touch in a state where the first touch is maintained; and
a display unit (110) for displaying an option menu including a plurality of functions on a screen under the control of the controller (100).

9. The apparatus of claim 8, wherein after the detecting of the occurrence of the second touch, the controller (100) compares a coordinate of a position at which the first touch (401) occurs and a coordinate of a position at which the second touch (403) occurs, and determines whether the position of the first touch and the position of the second touch satisfy a predetermined position condition as a result of the comparing of the coordinates of the positions.

10. The apparatus of claim 9, wherein if the predetermined position condition is satisfied, the controller (100) displays an option menu including the plurality of functions on the screen.

11. The apparatus of claim 9, wherein the position condition is indicated in a direction in which the second touch (403) is located with respect to the position of the first touch (401).

12. The apparatus of claim 8, wherein the controller (100) generates an option menu including an associated function with respect to the function currently being executed and provides the option menu to the display unit,
wherein if a web browser is currently being executed, the controller generates an option menu including at least one of functions among 'new folder', 'align icon', 'renew', 'store to configuration table', 'graphic option', 'display mode', 'undo copy', and 'attribute'.

13. The apparatus of claim 10, wherein the controller (100) generates an option menu including an associated function corresponding to the position at which the first touch occurs and provides the option menu to the display unit.

14. The apparatus of claim 13, wherein the controller (100) generates an option menu including at least one of functions among 'open', 'file transfer', 'advanced search', 'cut', 'copy', 'create shortcut', 'delete', 'rename', and 'attribute',
wherein if the position at which the first touch occurs is a background area that does not display an icon, the controller generates an option menu including at least one of functions among 'new folder', 'align icon', 'renew', 'store to configuration table', 'graphic option', 'display mode', 'undo copy', and 'attribute'
